# DEMANDE DE BREVET EUROPEEN

(11) **EP 4 417 656 A1**
(43) Date de publication de la demande: **21.08.2024**
(21) Numéro de dépôt: 24305272.7
(22) Date de dépôt: 16.02.2024
(51) Int. Cl.: C09D 5/02, C09D 7/61, C09D 7/63, C09D 179/02

(54) **COMPOSITION DE REVÊTEMENT GARNISSANT POUR APPLICATION EXTÉRIEURE EN CONDITIONS CLIMATIQUES EXTRÊMES**

(30) Priorité: 17.02.2023 FR 2301480
(71) Demandeur: Cromology Research & Industry, 92800 Puteaux (FR)
(72) Inventeur: ANTON, Charlène, 38110 SAINT-DIDIER-DE-LA-TOUR (FR); BAUDIN, Agnès, 73240 SAINT GENIX SUR GUIERS (FR); CHIKHI, Fahima, 73330 LE PONT-DE-BEAUVOISIN (FR); SCHOONDERGANG, Marcellus, 38480 SAINT JEAN D'AVELANNE (FR)
(74) Mandataire: Plasseraud IP

(57) **Abrégé**

L'invention concerne une composition de revêtement comprenant :
a) Au moins 8% en poids sec, par rapport au poids total de la composition, d'un liant comprenant :
a1) un latex polymérique d'un polymère carboxylé, comprenant une phase aqueuse, pouvant former un film, et
a2) un polyol ramifié polyetheramine dissout dans la phase aqueuse dudit latex ; et

b) Un additif de séchage comprenant:
b1) un floculant,
b2) une base volatile,

le pH de l'additif de séchage étant compris entre 9 et 12
dans laquelle la quantité sèche de floculant est comprise entre 0,02% et 1,2% en poids sec, par rapport au poids total de la composition.

## Description

### Domaine technique

La présente divulgation relève du domaine des compositions de revêtement, en particulier des peintures. Plus particulièrement, la présente divulgation se rapporte à des peintures, capables de masquer le faïençage d'anciennes peintures ou les micro-fissures inférieures à 0,2 mm d'un support, applicables en extérieur dans des conditions climatiques extrêmes.

### Technique antérieure

Une peinture doit présenter plusieurs propriétés pour être applicable en extérieur. Parmi celles-ci, la peinture doit être résistante aux conditions climatiques telles que la pluie, le soleil, le froid et le chaud.

Du fait des aléas météorologiques, il n'est pas toujours possible d'appliquer une peinture extérieure. Un des grands défis pour les peintures extérieures est d'améliorer ce point.

Il y a donc une recherche constante d'élargissement des conditions climatiques aux cours desquelles la peinture peut être appliquée. En effet, pour les exigences d'avancement de chantier, les professionnels sont souvent amenés à travailler par grande chaleur, par froid intense et/ou encore par temps humide.

Parmi les avancées notables de ces dernières années, on peut citer le document WO 2008/068193 qui divulgue un additif pour améliorer la résistance à la pluie de la peinture en phase de séchage.

Le document WO 2019/145265 divulgue une composition d'un liant en phase aqueuse présentant une rapidité de séchage importante en condition froide et humide mais également un temps ouvert suffisamment élevé par temps chaud et sec.

Ainsi, il est nécessaire de trouver un compromis entre séchage rapide par temps froid et humide et un temps ouvert suffisant pour l'opérateur par temps chaud et sec lorsqu'une peinture dite tout temps est développée. Les documents EP 3 945 116 et EP 3 945 117 s'attachent à ce problème. Cependant, en particulier par temps froid et humide, les peintures divulguées dans ces documents ne sont pas applicables pour obtenir un revêtement sec présentant une épaisseur supérieure à 200 µm et des performances mécaniques permettant de masquer le faïençage et microfissures inférieures à 0,2 mm.

En effet, si l'élargissement de la gamme de température à laquelle une peinture peut être appliquée représente un avantage certain, les performances mécaniques telles que la résistance au faïençage et l'absence d'apparition de microfissures dans le temps sont des gages de bonne qualité d'une peinture.

Bien que les solutions apportées dans les documents cités ci-dessus soient satisfaisantes, il existe toujours un besoin de développer une peinture pour l'extérieur qui soit plus polyvalente à savoir qui puisse être appliquée sur une plage de conditions climatiques plus large et à des épaisseurs permettant de masquer le faïençage, en particulier, qui soit applicable de sorte à conduire à une épaisseur sèche du revêtement d'au moins 200 µm.

### Résumé de l'invention

La présente invention permet d'atteindre au moins un des objectifs suivants :
- O1- : applicable en toute saison,
- O2- : applicable sur une large gamme de températures,
- O3- : applicable sur une large gamme d'humidité relative
- O4- : applicable sur support condensant,
- O5- : peinture permettant de masquer le faïençage de microfissures inférieures à 0,2 mm,
- O6- : peinture résistante à la décoloration, que ce soit due à l'eau ou aux rayons Ultraviolets.
- O7- : obtention d'un revêtement de matité importante

L'invention concerne une composition de revêtement comprenant :
a) Au moins 8% en poids sec, par rapport au poids total de la composition, d'un liant comprenant :
   a1) un latex polymérique d'un polymère carboxylé, comprenant une phase aqueuse, pouvant former un film, et
   a2) un polyol ramifié polyetheramine dissout dans la phase aqueuse dudit latex ; et
b) Un additif de séchage comprenant:
   b1) un floculant,
   b2) une base volatile,

le pH de l'additif de séchage étant compris entre 9 et 12,
dans laquelle la quantité sèche de floculant est comprise entre 0,02% et 1,2% en poids sec, par rapport au poids total de la composition.

Ceci est surprenant et va à l'encontre des enseignements de l'art antérieur. En effet, comme expliqué dans l'article de Cabrera et al. Materials 2022, 15, 7397 (doi.org/10.3390/ma15207397), l'utilisation d'un additif de séchage n'est, selon ce document, pas utilisable par temps chaud et sec, du fait d'un temps ouvert trop court pour le mélange à appliquer. Par ailleurs, l'article précise que le mélange de l'additif et dudit liant n'est pas stable et peut être utilisé en association uniquement avant l'application.

L'invention concerne également un procédé de formation d'un revêtement dans une gamme de température allant de 2°C à 35°C à une humidité relative inférieure ou égale à 90%, comprenant une étape de dépôt de la composition de revêtement décrite ci-dessus sur un support.

L'invention concerne, en outre, un revêtement de support obtenu par le procédé décrit ci-dessus, caractérisé en ce que l'épaisseur du revêtement sec est comprise entre 200 µm et 500 µm.

### Brève description des dessins

**Fig. 1**

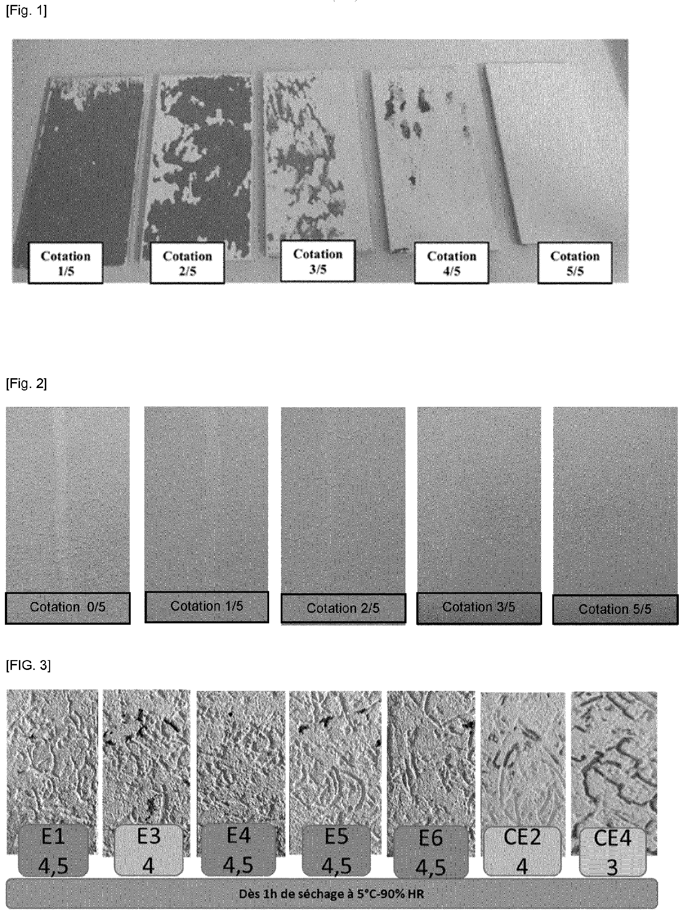

   [Fig. 1] La figure 1 est une photo de plaques montrant la cotation du test de résistance à la pluie en phase de séchage.
**Fig. 2**
   [Fig. 2] La figure 2 est une photo de plaques montrant la cotation du test de décoloration.
**Fig. 3**
   [Fig. 3] La figure 3 est une photo de plaques montrant les résultats du test de résistance à la pluie en phase de séchage des exemples et contre-exemples, sur support structurés.

### Définitions

Dans le cadre de la présente divulgation, on entend par :
- « phase de séchage » la période durant laquelle il y a évaporation du solvant et enchevêtrement des particules de polymère, formant ainsi un film
- « temps ouvert » le temps disponible pour appliquer et égaliser une peinture sans que celle-ci ne laisse de trace du fait qu'elle commence à sécher en surface,
- « revêtement sec » revêtement obtenu après le processus de séchage/filmification
- « support condensant » un support sur lequel il y a de l'humidité à la surface,
- « revêtement d'une matité importante » un revêtement présentant une valeur de réflectance sous l'angle d'indice 85° inférieure à 2 UB selon la norme NF EN 13300.

### Description détaillée de l'invention

### La composition de revêtement

Comme exposé ci-dessus, l'invention concerne une composition de revêtement comprenant :
a) Au moins 8% en poids sec, par rapport au poids total de la composition, d'un liant comprenant :
   a1) un latex polymérique d'un polymère carboxylé, comprenant une phase aqueuse, pouvant former un film, et
   a2) un polyol ramifié polyetheramine dissout dans la phase aqueuse dudit latex ; et
b) Un additif de séchage comprenant:
   b1) un floculant,
   b2) une base volatile,

le pH de l'additif de séchage étant compris entre 9 et 12
dans laquelle la quantité sèche de floculant est comprise entre 0,02% et 1,2% en poids sec, par rapport au poids total de la composition.

On entend par composition de revêtement une composition liquide qui après application sur un support et séchage conduit à la formation d'un film. En particulier, la composition de revêtement selon l'invention est une composition de peinture formant un revêtement sous forme de film après application et séchage.

De manière préférentielle, la composition de revêtement selon l'invention est une composition aqueuse.

### Le liant

Le liant est le composant d'une composition de revêtement qui permet d'apporter la cohésion entre les différents composants de ladite composition. Par exemple, dans une composition de peinture, le liant contribue aux performances mécaniques et de durabilité du revêtement et permet de former un film liant entre eux les différents composants de la peinture. Un liant peut être utilisé seul ou en combinaison avec un ou plusieurs autres liants.

Le latex polymérique est la composante du liant qui permet de former un film. Conformément à l'invention, le latex est un latex d'un polymère carboxylé. On entend par polymère carboxylé un polymère qui comprend des groupements carboxyle.

Le polymère carboxylé peut être un polymère obtenu par la polymérisation de monomères choisis dans le groupe comprenant les, de préférence constitué des, acides monocarboxyliques monoéthylèniquement insaturés, tels que les acides monocarboxyliques monoéthylèniquement insaturés en C3-C6, les acides dicarboxyliques monoéthylèniquement insaturés, tels que les acides dicarboxyliques monoéthylèniquement insaturés en C4-C6, les esters, les diesters et/ou les anhydrides des acides précités et leurs mélanges.

En particulier, le polymère carboxylé peut être un polyéthylène carboxylate obtenu par la polymérisation de monomères choisis dans le groupe comprenant, de préférence constitué de, l'acide acrylique, l'acide métacrylique, l'acide crotonique, l'acide 2-éthylènepropènoïque, l'acide 2-propylpropénoïque et leurs mélanges.

Le polyol ramifié polyétheramine est solubilisé dans la phase aqueuse du latex polymérique. Par "ramifié" on entend que le polyol de polyétheramine n'a pas de structure linéaire, mais a une multitude de points de ramification dans le squelette polymère. De tels points de ramification peuvent être des atomes de carbone tri ou tétra-substitués et/ou des groupes amino tertiaires. Les points de ramification peuvent être les groupes amino tertiaires.

Des liants particulièrement adaptés à la composition de revêtement selon l'invention sont par exemple l'Acronal^{®} Edge 6390, Acronal^{®} Edge 6391, Acronal^{®} 5560, commercialisés par la société BASF^{®}.

La composition de revêtement selon l'invention comprend au moins 8% en poids sec, par rapport au poids total de la composition, d'un liant, de préférence, au moins 9% en poids sec, de manière préférentielle au moins 10% en poids sec et de manière encore plus préférentielle au moins 11% en poids. De manière avantageuse la composition de liant comprend moins de 20% en poids sec, de manière plus avantageuse moins de 18% en poids sec et de manière encore plus avantageuse, moins de 15% en poids sec. De manière particulièrement avantageuse, la composition de revêtement selon l'invention comprend entre 12% en poids sec et 13% en poids sec, par rapport au poids total de la composition d'un liant.

### L'additif de séchage

Le floculant présent dans l'additif de séchage doit être chimiquement inerte pour que la composition selon l'invention soit stable au stockage. Pour ce faire, l'additif de séchage comporte une base en quantité suffisante pour que le floculant n'ait pas d'effet sur la composition pendant le stockage. Un léger excès de base n'est en revanche pas préjudiciable pour la stabilité au stockage. En d'autres termes, le floculant est neutralisé avec une base.

C'est pourquoi l'additif de séchage présente un pH compris entre 9 et 12. Cette valeur de pH est bien entendu la valeur du pH de l'additif de séchage en tant que tel. En d'autres termes, le pH de l'additif de séchage indiqué dans la présente divulgation est le pH de l'additif de séchage avant son introduction dans la composition selon l'invention. Dans un mode de réalisation, le pH de l'additif de séchage est compris entre 9,5 et 11,5.

Des additifs de séchage particulièrement adaptés à la composition de revêtement selon l'invention sont le WP20^{®} commercialisé par la société Vanora^{®}, le Loxanol MI 6835^{®} commercialisé par la société BASF^{®} et le PROX^{®} LTQS commercialisé par la société Synthron^{®}.

### Le floculant

Un floculant permet l'agrégation, à la surface du revêtement au cours du séchage, des matières solides en suspension. Plus précisément, un floculant est un réactif cationique (chargé positivement) ou anionique (chargé négativement) qui interagit avec les éléments environnants ayant, à leur surface, des charges électriques opposées à celles du floculant, ce qui provoque leur attraction mutuelle et la formation d'agrégats. Dans le cadre de la présente invention, le floculant est neutralisé avec une base volatile, ainsi, le floculant selon la présente invention est cationique.

Dans le cadre de la présente invention, le floculant participe à la diminution du temps nécessaire pour que la composition de revêtement sèche après application sur un support.

Conformément à l'invention, le floculant est présent, dans la composition de revêtement, à une teneur comprise entre 0,02% et 1,2% en poids sec, par rapport au poids total de la composition. De manière avantageuse, la teneur en floculant est comprise entre 0,04% et 1% en poids sec, par rapport au poids total de la composition.

### La base volatile

On entend par base volatile une base qui s'évapore naturellement lorsque la composition de revêtement est appliquée sur une surface. En effet, comme expliqué plus haut, la base permet de neutraliser l'action du floculant en période de stockage de la composition, mais le floculant doit pouvoir effectuer son rôle une fois la composition de revêtement appliquée sur le support. Le caractère volatile de la base permet d'annihiler la neutralisation du floculant une fois la composition selon l'invention appliquée sur un support.

Dans le cadre de la présente invention, la base volatile est avantageusement l'ammoniaque.

### Composants optionnels

Dans un mode de réalisation particulier, la composition de revêtement comprend en outre un second liant.

De manière préférentielle, le second liant est choisi dans le groupe comprenant les, de préférence constitué des, liants de type acrylique, liants de type styrène acrylique, liants de type vinylique et leurs mélanges. L'addition d'un second liant permet d'améliorer la résistance à la fissuration du revêtement sec, en particulier par temps froid et humide.

Lorsqu'un second liant est présent, le ratio, en poids sec, second liant sur le liant a) est préférentiellement inférieur à 0,3, plus préférentiellement inférieur à 0,25 et encore plus préférentiellement inférieur à 0,2.

Dans un mode de réalisation particulier de l'invention, la composition comprend en outre un stabilisateur de pH. Le stabilisateur de pH permet d'améliorer la stabilité de la composition.

La quantité de stabilisateur de pH est préférentiellement déterminée de sorte à obtenir un pH compris entre 7,5 et 10,5, plus préférentiellement entre 8 et 10, et encore plus préférentiellement entre 8,5 et 9,5.

Dans un mode de réalisation particulier de l'invention, la composition comprend en outre au moins un pigment, de préférence le dioxyde de titane.

Le pigment est préférentiellement présent à raison d'entre 0,1% et 30% en poids sec, par rapport au poids total de la composition, plus préférentiellement entre 0,3% et 20% en poids sec et encore plus préférentiellement entre 0,5% et 15% et poids sec.

La composition de revêtement selon l'invention peut en outre comprendre un ou plusieurs des composants suivants :
- charge comme par exemple carbonate de calcium, talc, nepheline, feldspath, charge allégée de type billes de verre creuses, silicate d'aluminium,
- polymère opaque comme par exemple Ropaque^{™} Ultra DS de DOW, AQACell^{®} HIDE 6399 X de BASF, Orgal^{®} Orgawhite 2000 de Organik Kimya,
- dispersant comme par exemple Ecodis^{™} P90, Coadis^{™} BR3, Coadis^{™} BR85 de COATEX, Disperbyk^{®} 190 de BYK-Chemie GmbH,
- additifs comme par exemple agent de coalescence, plastifiant, épaississant, agent mouillant, agent compatibilisant, agent biocide de conservation, agent biocide de protection de film, agent antimousse.

### Le procédé selon l'invention

Comme mentionné précédemment, l'invention concerne également un procédé de formation d'un revêtement dans une gamme de température allant de 2°C à 35°C à une humidité relative inférieure ou égale à 90%, comprenant une étape de dépôt de la composition de revêtement décrite ci-dessus sur un support.

Cette étape de dépôt peut être mise en oeuvre par tous moyens connus de la personne du métier, préférentiellement cette étape est réalisée avec un pinceau et/ou un rouleau. De manière plus spécifique, le procédé selon l'invention est particulièrement adapté au revêtement de surface telle qu'un mur, en particulier un mur de façade.

La composition pouvant être appliqué dans une gamme de température allant de 2°C à 35°C, le support peut présenter une température comprise dans cette gamme. En particulier, le support peut être un support froid, c'est-à-dire présenter une température comprise entre 2°C et 15°C, et le support peut-être un support chaud, c'est-à-dire qui présente une température comprise entre 25°C et 35°C.

Dans un mode de réalisation particulier, le support est un support condensant.

### Revêtement de support selon l'invention

Comme indiqué plus haut, l'invention concerne également un revêtement de support obtenu par le procédé décrit ci-dessus, caractérisé en ce que l'épaisseur du revêtement sec est comprise entre 200 µm et 500 µm. De manière avantageuse l'épaisseur du revêtement sec est comprise entre 200µm et 400µm.

Ainsi, la composition selon l'invention est avantageusement classée en catégorie D3 selon la norme NF T 34-722, c'est à dire que la composition selon l'invention permet d'obtenir un revêtement de support présentant une épaisseur comprise entre 200 µm et 400 µm et capable de masquer le faïençage et les microfissures inférieures à 0,2 mm.

### Exemples

### Exemple 1 : Stabilité au stockage

Une composition E1 de peinture selon l'invention a été préparée selon la formulation répertoriée dans le tableau 1 ci-dessous :

**[Tableau 1]**

| | E1 |
|---|---|
| composant | % massique |
| EAU DE VILLE | 10,82 |
| ADDITIFS | 7,23 |
| STABILISATEUR DE pH | 0,07 |
| PIGMENT TiO₂ | 10,5 |
| CHARGES | 40,38 |
| CO-LIANT STYRENE ACRYLIQUE | 5 |
| ACRONAL^{®} EDGE 6390 | 25 |
| VANORA WP20^{®} | 1 |

Les pourcentages massiques correspondent aux produits tels qu'ajoutés. Pour déterminer les pourcentages en poids sec il convient de se référer à l'extrait sec du produit. Par exemple, pour l'additif de séchage, le Vanora WP20^{®} présente un extrait sec de 30%, donc le pourcentage massique en poids sec de l'additif de séchage est de 0,3%.

Cette composition a été placée dans une étuve à 45°C pendant 14J, aucune altération de la composition n'a été détectée. La composition de peinture selon l'invention est donc stable, malgré la présence du floculant Vanora WP20 et d'un stabilisateur de pH.

### Exemple 2 : Performances mécaniques

8 compositions supplémentaires ont été préparées selon les formulations répertoriées dans le tableau 2 ci-dessous :

**[Tableau 2]**

| | E2 | E3 | E4 | E5 | E6 | CE1 | CE2 | CE3 |
|---|---|---|---|---|---|---|---|---|
| composant | % massique | % massique | % massique | % massique | % massique | % massique | % massique | % massique |
| Eau de ville | 10,82 | 10,82 | 10,82 | 10,82 | 10,82 | 8 | 10,82 | 12,82 |
| Additifs | 7,23 | 7,23 | 7,23 | 7,23 | 7,23 | 7,23 | 7,23 | 7,23 |
| Stabilisateur de pH | 0,07 | 0,07 | 0,07 | 0,07 | 0,07 | 0,07 | 0,07 | 0,07 |
| Pigment TiO₂ | 10,5 | 10,5 | 10,5 | 10,5 | 10,5 | 10,5 | 10,5 | 10,5 |
| Charges | 40,38 | 40,38 | 40,38 | 40,38 | 40,38 | 34,29 | 40,38 | 40,38 |
| Co-liant styrène acrylique 1 | | 8 | | | | | 30 | 14 |
| ACRONAL^{®} EDGE 6390 | 30 | 22 | 25 | 22 | 25 | 40 | | 14 |
| Co-liant styrène acrylique 1 | | | 5 | 8 | | | | |
| Co-liant acrylique vinylique 1 | | | | | 5 | | | |
| VANORA WP20^{®} | 1 | 1 | 1 | 1 | 1 | 0 | 1 | 1 |

Les pourcentages massiques correspondent aux produits tels qu'ajoutés. Pour déterminer les pourcentages en poids sec il convient de se référer à l'extrait sec du produit. Par exemple, pour l'additif de séchage, le Vanora WP20^{®} présente un extrait sec de 30%, donc le pourcentage massique en poids sec de l'additif de séchage dans les compositions E1 à E6, CE2 et CE3 est de 0,3%.

La résistance à la pluie en phase de séchage (pluie précoce) de chacune des compositions E1 à E6, CE1 à CE3 ainsi que d'une composition CE4 d'une peinture tous temps classique (applicable à une épaisseur sèche inférieure à 200µm) ont été testée selon le protocole suivant :
1- recouvrement d'une plaque par application d'une couche de produit pour une épaisseur sèche d'environ 285µm,
2- séchage de la plaque recouverte, la plaque étant positionnée verticalement, soit à 23°C avec 50% d'humidité relative pendant 30 minutes, soit à 5°C avec 90% d'humidité relative pendant 1 heure,
3- aspersion de la plaque avec un pommeau de douche pendant 15 minutes,
4- séchage de la plaque après test en condition ambiante.

Les résultats sont exprimés par cotation visuelle telle qu'illustrée à la figure 1 et répertoriée dans le tableau 3 ci-dessous :
[Tableau 3]

| Cotation | Description |
|---|---|
| 1 | Décollement total du film de peinture |
| 2 | Décollement de plus de 50% du film de peinture |
| 3 | Décollement entre 25% et 50% du film de peinture |
| 4 | Décollement de moins de 25% du film de peinture |
| 5 | Aucun décollement du film de peinture |

La résistance à la décoloration par ruissellement d'eau de chacune des compositions E1 à E6, CE2 et CE4 a été testée selon le protocole suivant :
1- Application de la composition sur une plaque de fibrociment,
2- Séchage des plaques soit à 23°C et 50% d'humidité relative pendant 5h , soit à 5°C et 90% d'humidité pendant 5h
3- Disposition des plaques sur une machine à pluie,
4- Ruissellement d'un filet d'eau sur chacune des plaques pendant 1h,
5- Séchage des plaques verticalement pendant 24h,
6- Observation des plaques sous une cabine à lumière (lumière D65),
7- La décoloration peut être validée (par exemple, avec une teinte TF224-2 pour les bases PA ou avec une teinte TF240-3 pour les bases ME).

Les résultats sont exprimés par cotation visuelle telle qu'illustrée à la figure 2 et répertoriée dans le tableau 4 ci-dessous :

**[Tableau 4]**

| Cotation | Défaut observé | Description |
|---|---|---|
| 5 | Aucun | Quel que soit l'angle d'observation de la plaque |
| 4 | Très légère trace | Une très légère trace peut être détectée selon l'angle d'observation de la plaque |
| 3 | Légère trace | Décoloration perceptible en incidence normale |
| 2 | Trace | Décoloration visible en incidence normale |
| 1 | Trace importante | Décoloration prononcée en incidence normale |
| 0 | Trace très importante | Décoloration très prononcée en incidence normale |

La résistance à la fissuration de chacune des compositions E1 à E6, CE2 et CE4 a été testée selon le protocole suivant :
1- Application de la composition, à une épaisseur d'environ 285µm, sur fibrociment préalablement revêtu d'une couche d'enduit (permettant d'obtenir un relief important).
2-Séchage des plaques à 5°C et 90% HR pendant 12h
3-Observation des plaques et cotation vis-à-vis de la présence ou non de microfissures

Les résultats sont exprimés par cotation visuelle telle que répertoriée dans le tableau 5 ci-dessous :

**[Tableau 5]**

| Cotation | Description du défaut |
|---|---|
| 5 | Absence de défaut |
| 4 | Amorces de microfissures < 0,2 mm |
| 3 | Présence de microfissures < 0,2 mm sur moins de 25% de la surface de la plaque |
| 2 | Présence de microfissures < 0,2 mm sur moins de 50% de la surface de la plaque |
| 1 | Présence de microfissures < 0,5 mm et/ou sur plus de 50% de la surface de la plaque |

Les résultats de chacun des tests sont répertoriés dans le tableau 6 ci-dessous :

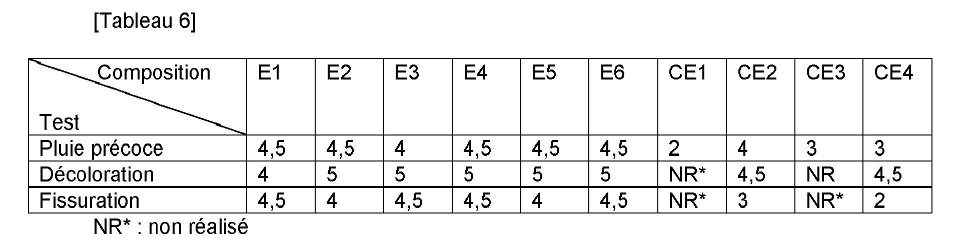

La figure 3 illustre les résultats du test à la pluie précoce des essais E1, E3, E4, E5, E6, CE2 et CE4.

Toutes les compositions selon l'invention (E1 à E6) satisfont aux trois tests. La figure 3 montre les plaques du test de résistance à la pluie précoce des compositions E1, E3, E4, E5, E6, CE2 et CE4 Les compositions hors invention CE1 et CE3 ne sont pas résistantes à la pluie précoce, elles n'ont pas été testés pour la décoloration et la fissuration.

Les compositions CE2 et CE4 présentent également une bonne résistance à la décoloration mais ne sont pas résistantes à la fissuration.

Ainsi, la combinaison de la composition de liant et de la composition de séchage dans les proportions de la composition selon l'invention permet d'obtenir une composition de revêtement remplissant les objectifs, en particulier une résistance à la pluie en phase de séchage et une résistance à la fissuration.

## Revendications

1. Composition de revêtement comprenant :
a) Au moins 8% en poids sec, par rapport au poids total de la composition, d'un liant comprenant :
a1) un latex polymérique d'un polymère carboxylé, comprenant une phase aqueuse, pouvant former un film, et
a2) un polyol ramifié polyetheramine dissout dans la phase aqueuse dudit latex ; et
b) Un additif de séchage comprenant:
b1) un floculant,
b2) une base volatile,
le pH de l'additif de séchage étant compris entre 9 et 12
dans laquelle la quantité sèche de floculant est comprise entre 0,02% et 1,2% en poids sec, par rapport au poids total de la composition.

2. Composition de revêtement selon la revendication 1, **caractérisée en ce qu'**elle comprend en outre un second liant.

3. Composition de revêtement selon la revendication 2, **caractérisée en ce que** le ratio, en poids sec, second liant sur le liant a) est inférieur à 0,3, préférentiellement inférieur à 0,25 et plus préférentiellement inférieur à 0,2.

4. Composition selon l'une quelconque des revendication précédentes, **caractérisée en ce qu'**elle comprend en outre un stabilisateur de pH.

5. Composition selon l'une quelconque des revendication précédentes, **caractérisée en ce qu'**elle comprend en outre un pigment.

6. Composition selon la revendication 5, **caractérisée en ce que** le pigment est le dioxyde de titane.

7. Procédé de formation d'un revêtement dans une gamme de température allant de 2°C à 35°C à une humidité relative inférieure ou égale à 90%, comprenant une étape de dépôt d'une composition de revêtement selon l'une quelconque des revendications 1 à 6 sur un support.

8. Procédé selon la revendication 7, **caractérisée en ce que** le support est un support condensant.

9. Revêtement de support obtenu par le procédé selon l'une des revendications 7 et 8 **caractérisé en ce que** l'épaisseur du revêtement est comprise entre 200 µm et 500 µm.
